Europäisches Patentamt

European Patent Office

Office européen des brevets

(11) Veröffentlichungsnummer: **0 470 417 A2**

# (12) EUROPÄISCHE PATENTANMELDUNG

(21) Anmeldenummer: **91112170.5**

(22) Anmeldetag: **20.07.91**

(51) Int. Cl.⁵: **G05B 19/12**

(30) Priorität: **04.08.90 DE 4024861**

(43) Veröffentlichungstag der Anmeldung:
**12.02.92 Patentblatt 92/07**

(84) Benannte Vertragsstaaten:
**AT BE CH DE DK ES FR GB GR IT LI LU NL SE**

(71) Anmelder: **Urban GmbH & Co. Maschinenbau KG**
**Dornierstrasse 5**
**W-8940 Memmingen(DE)**

(72) Erfinder: **Maurus, Leonhard**
**Blattergasse 9 1/3**
**W-8940 Memmingen(DE)**

(74) Vertreter: **Pfister, Helmut, Dipl.-Ing.**
**Buxacher Strasse 9**
**W-8940 Memmingen/Bayern(DE)**

(54) **Verfahren und Vorrichtung zur Steuerung einer Maschine zur Herstellung von Fensterrahmen aus Kunststoffprofilen.**

(57) Zur Ermittlung der Form eines Profils (1) dient ein Tastelement (6), dessen Taster (7) bei der Vorschubbewegung gegen die Oberfläche (8) des Profils eine Schwenkbewegung ausführt. Der Größe der Schwenkbewegung entspricht eine bestimmte Impulszahl, die das Winkelmeßsystem (4) einem Rechner zuleitet, der dann je nach der Impulszahl bestimmte Bearbeitungsgänge auslöst.

Fig.1

Die Erfindung betrifft ein Verfahren zur Steuerung des Arbeitsablaufes einer Maschine zur Herstellung von Fensterrahmen aus Kunststoffprofilen in Abhängigkeit von der Profilkontur, wobei mindestens ein Tastelement gegen das Profil bewegt wird und das Tastelement je nach Profilform ein Signal auslöst. Die Erfindung betrifft weiter eine Vorrichtung zum Durchführen eines derartigen Verfahrens.

In der DE-PS 30 20 739 ist eine Vorrichtung zum Entfernen von überstehenden Schweißraupen oder dergleichen an den Ecken von Fensterrahmen beschrieben, wobei an der Aufnahme für den Rahmen zwei Endschalter in unterschiedlicher Höhe angeordnet sind, die durch unterschiedliche Rahmen-Profile in unterschiedlicher Weise betätigbar sind. Durch die Verwendung solcher Endschalter in unterschiedlicher Höhe ist es möglich, das verarbeitete Profil zu erkennen. Es kommt dabei darauf an, daß jeder Endschalter je einem markanten Profilelement zugeordnet ist und dementsprechend vom Profil betätigt wird.

Eine Vorrichtung dieser Art ist jedoch nur für ganz wenige Profilarten brauchbar. Durch eine Vergrößerung der Anzahl der Endschalter scheint es zwar möglich zu sein, eine größere Zahl unterschiedlicher Profile zu erkennen. Die Anordnung wird aber dann sehr unübersichtlich und störungsanfällig. Hinzu kommt, daß die Abtastelemente, nämlich die Endschalter selbst eine gewisse Größe besitzen, die es erschwert, kleine Unterschiede am Profil zu erkennen.

Es ist jedoch wünschenswert, in der gleichen Maschine Profile unterschiedlicher Ausbildung erkennen zu können. Der Arbeitsablauf soll sicher dem jeweiligen Profil angepaßt werden, und Fehlbedienungen sollen mit Sicherheit ausgeschlossen werden. In bestimmten Fällen wäre es günstig, Profile mit größeren Toleranzen zu erkennen.

Diese Aufgaben lassen sich jedoch mit Endschaltern nicht lösen.

Bei Vorrichtungen, die das Profil erkennen, ist ferner darauf zu achten, daß durch die Benützung dieser Vorrichtungen der Arbeitsablauf nicht verzögert wird. Arbeitsgänge, die zunächst das Profil ertasten und prüfen, würden zu einer Verzögerung des Arbeitsablaufes führen.

Der Erfindung liegt die Aufgabe zugrunde, ein Verfahren und eine Vorrichtung der eingangs angegebenen Gattung, insbesondere zur Bearbeitung von Schweißraupen oder dergleichen, vorzuschlagen, mit denen es möglich ist, eine große Zahl unterschiedlicher Profile sicher zu erkennen, so daß je nach dem Profil der entsprechende Arbeitsablauf veranlaßt werden kann.

Zur Lösung dieser Aufgabe geht die Erfindung aus von einer Vorrichtung der eingangs angegebenen Gattung. Beim erfindungsgemäßen Verfahren ist vorgesehen, daß vom Tastelement je nach seiner Verstellung beim Kontakt mit dem Profil eine Zahl von elektrischen Impulsen ausgelöst und einem Rechner zugeleitet wird, von dem entsprechend der empfangenen Impulszahl ein dem Profil angepaßter, vorbereiteter Arbeitsablauf signalisiert und z.B. ausgelöst wird.

Bei der Erfindung genügt schon ein Tastelement, um eine Vielzahl von Konturen erkennen zu können. Dazu ist es nur notwendig, das Tastelement derart anzuordnen, daß es bei seiner Bewegung gegen das Profil in demjenigen Bereich des Profiles zur Anlage kommt, der für verschiedene Profile unterschiedlich ist. Wenn also z.B. die Profile in einem Bereich eine unterschiedliche Höhe besitzen, wird das Tastelement so geführt, daß es diese unterschiedliche Höhe erkennt. Mit einem Endschalter ist dies nicht möglich. Ein Endschalter wird nur betätigt oder nicht. Das Tastelement bei der Erfindung ist dagegen in der Lage, die unterschiedliche Höhe mehr oder weniger exakt auszumessen.

Bei der Erfindung sind aber nicht nur unterschiedliche Höhen meßbar. Auch unterschiedliche Breiten können vom Tastelement ermittelt werden.

In weiterer Ausführung der Erfindung wird vorgeschlagen, daß die dem Rechner zugeleiteten Impulse bezüglich ihrer zeitlichen Abfolge ausgewertet werden. Wenn das Tastelement sich über das Profil bewegt, können bestimmte Impulsgruppen ausgelöst werden, die dann ein Anzeichen für verschiedene Profile sind.

Bei der Erfindung werden die Impulse einem Rechner zugeleitet, der bei derartigen Maschinen ohnehin in der Regel vorhanden ist. Dieser Rechner vergleicht die eingegebenen Impulse bezüglich ihrer Zahl oder ihrer zeitlichen Abfolge mit dem ihm vorliegenden Mustern und löst sinngemäß das vorbereitete Arbeitsprogramm oder geeignete Signale aus.

Dabei wird ein weiterer Vorteil der Erfindung deutlich. Manche Profile weisen in bestimmten Abmessungen Toleranzen auf, die durch die jeweilige Herstellung bedingt sind. Es ist klar, daß in bestimmten Grenzen diese Toleranzen hingenommen werden können. Werden diese Grenzen überschritten, ist das entsprechende Profil entweder überhaupt nicht oder nicht für den vorgesehen Zweck verwertbar. Bei der Erfindung können solche Probleme ohne weiteres mitgelöst werden. Der Rechner kann so programmiert werden, daß auch noch Abweichungen der eingehenden Impulszahl akzeptiert werden, wenn die Abweichungen innerhalb bestimmter Grenzen liegen. Dennoch bleibt es möglich, sehr exakt zu messen und die tolerierbaren Abweichungen in anderen Fällen enger einzugrenzen.

Die erfindungsgemäße Vorrichtung zur Durchführung des Verfahrens ist dadurch gekennzeichnet, daß auf einem gegen das Profil bewegten Träger ein Tastelement beweglich gelagert ist, das mit einem Meßsystem gekoppelt ist, das je nach der gemessenen Bewegung des Tastelementes die Impulse abgibt.

Die Erfindung ist bei bloßer translatorischer Bewegung des Tastelementes verwirklichbar. Besser ist es jedoch, wenn das Tastelement ein Winkelmeßsystem herkömmlicher Ausbildung bewegt, beispielsweise durch geeignete Übersetzungsglieder, oder auch dadurch, daß das Tastelement direkt auf dem Winkelmeßsystem angeordnet wird. Je nach der Winkelbewegung, also dem Verstellbereich in Grad, wird dann eine entsprechende Impulszahl ausgelöst, die dem Rechner zugeleitet wird.

Bei einem abgewandelten Ausführungsbeispiel der Erfindung weist der Träger als Tastelement ein Band auf, das sich an das Profil anlegt und wobei dann die Impulszahl von der benötigten Bandlänge abhängt. Bei einer Einrichtung dieser Art können in einfacher Weise Dimensionen am Profil ermittelt werden, die sich rechtwinklig zur Bewegungsrichtung des Trägers oder dergleichen erstrecken.

Günstig ist es, wenn Andrückelemente vorgesehen sind, die das Band an das Profil andrücken. Auf diese Weise lassen sich die Abtastergebnisse verbessern.

Die Andrückelemente können beispielsweise Stifte oder Schieber sein. Es können aber auch elastisch federnde Bälge oder ähnliche Mittel verwendet werden.

Bei einer anderen Variante der Erfindung ist das Band ein Dehnungsmeßstreifen, dessen Dehnung die Impulszahl abgibt. Da bei einem Dehnungsmeßstreifen in der Regel die elektrischen Widerstandswerte durch die Dehnung verändert werden, ist es auch möglich, beispielsweise diese Meßwerte direkt im Rechner zu verwerten, ohne diese Werte zuerst in Impulszahlen umzusetzen.

Günstig ist es, wenn das Tastelement als Schwenkhebel ausgebildet ist. Diese Anordnung ergibt eine sehr einfache Bauweise der erfindungsgemäßen Vorrichtung. Der Schwenkbereich des Tastelementes ist den Impulsen analog.

Von Vorteil ist es ferner, wenn der Träger das Profil umgreift. Dadurch wird es möglich, daß auch diejenigen Teile des Profiles abge-tastet werden können, die nicht direkt in der Bewegungsrichtung des Tastelementes liegen. Die erwähnte Form des Trägers kann auch dazu benützt werden, daß Tastelemente beispielsweise rechtwinklig zur Bewegungsrichtung des Trägers an das Profil heranfahren. Der Träger kann beispielsweise bis auf die Unterlagen des Profiles vorbewegt werden, wodurch besonders genaue Meßergebnisse erzielbar sind.

Bei einer bevorzugten Ausführungsform der Erfindung ist vorgesehen, daß am Träger als verschiebbare Taststifte ausgebildete Tastelemente gelagert sind, die an verschiedenen Stellen am Profil zur Anlage kommen, die untereinander gekoppelt sind und deren Verschiebungsweg die Impulszahl bestimmt. Bei dieser Anordnung ist ein Band als Tastelement entbehrlich, da die Taststifte selbst diese Aufgabe übernehmen. Insbesondere ist diese Bauweise auch geeignet, rechtwinklig zur Bewegungsrichtung des Trägers Abtastungen vorzunehmen.

Für die Koppelung der Taststifte sind verschiedene Lösungen möglich. Die Taststifte können beispielsweise durch ein gemeinsames Band gekoppelt sein. Wenn die Taststifte beispielsweise durch Druckluft vorgeschoben werden, wird das Band durch geeignete Umlenkungen insbesonders flaschenzugartig mitgenommen.

Die Taststifte können aber auch durch ein Druckmedium gekoppelt sein, beispielsweise dadurch, daß der Vorschub der Taststifte durch ein hydraulisches Medium erfolgt und die Menge des Mediums gemessen wird, das zum Vorschub der verschiedenen Taststifte notwendig ist.

Bei einer anderen Ausbildungsform der Erfindung ist das Tastelement als Konturplatte ausgebildet. Durch eine geeignete Konturplatte, die auf die verschiedenen Formen der zu ertastenden Profile Rücksicht nimmt, läßt sich leicht erreichen, daß unterschiedliche Profile unterschiedliche Vorschubwege der Konturplatte ergeben.

In der Zeichnung sind einige Ausführungsbeispiele der Erfindung schematisch dargestellt. Es zeigen:

Fig. 1
die erfindungsgemäße Vorrichtung beim Abtasten eines Profils,
Fig. 2
die erfindungsgemäße Vorrichtung beim Abtasten eines anderen Profils,
Fig. 3
eine erfindungsgemäße Vorrichtung in anderer Ausbildung beim Abtasten eines anderen Profils,
Fig. 4
eine Abwandlung einer erfindungsgemäßen Vorrichtung,
Fig. 5 bis Fig. 11
weitere Ausführungsbeispiele der Erfindung, und
Fig. 12
eine Einzelheit einer erfindungsgemäßen Variante.

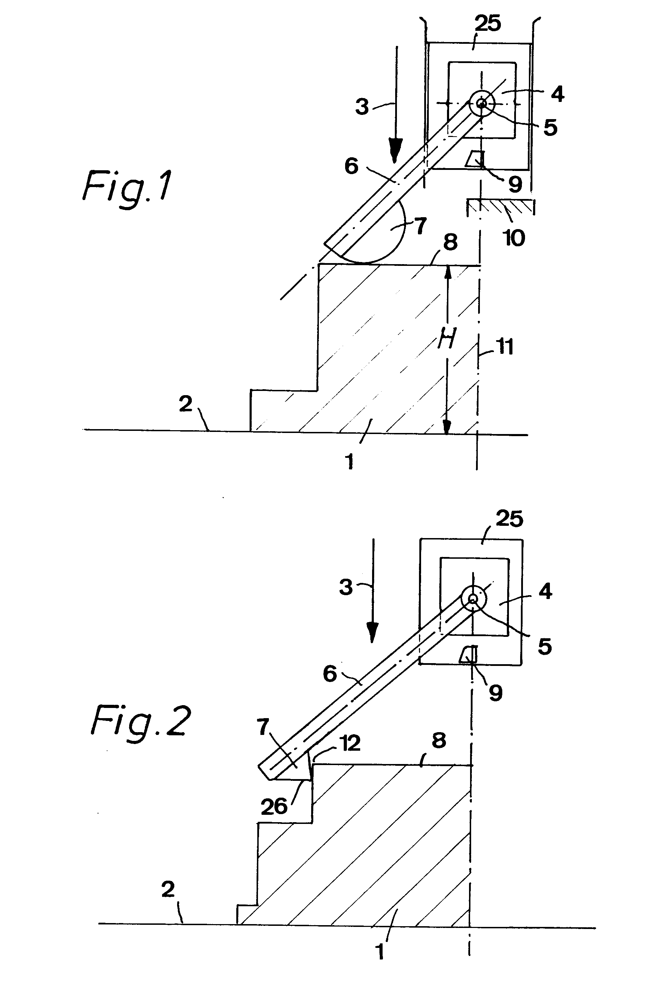

In der Darstellung der Fig. 1 ist das Profil mit 1 bezeichnet. Dieses Profil liegt auf einer Unterlage 2 auf. Rechtwinklig zur Unterlage 2 bewegt sich ein Träger 25 in Form eines Schlittens in Richtung des Pfeiles 3. Die Einzelheiten des Schlittens sind nicht näher dargestellt. Der Träger 25 trägt ein Winkelmeßsystem 4 an sich bekannter Ausbildung. Ein solches Winkelmeßsystem besteht beispielsweise aus einer Scheibe mit am Umfang gleichmäßig verteilten Aussparungen. Durch fotooptische Elemente fällt Licht durch die Aussparungen der Scheibe, wodurch einzelne Impulse erzeugt werden, wenn sich die Scheibe dreht. Beispielsweise kann je Grad Verdrehung ein Impuls vorgesehen sein, so daß jede Winkelbewegung in Grad einem Impuls entspricht. Die Achse 5, die beispielsweise die Achse der erwähnten Scheibe sein kann, trägt das Tastelement 6 mit dem Taster 7.

Es ist klar, daß bei einer Bewegung des Winkelmeßsystems 4 auf dem Träger 25 in Richtung des Pfeiles 3 der Taster 7 auf der Oberfläche 8 des Profils 1 zur Anlage kommen wird, und daß sich dann das Tastelement 6 aus seiner Nullage, die durch den Anschlag 9 auf dem Träger 25 bestimmt ist, im Uhrzeigersinn bewegen wird, bis der Schlitten mit dem Meßsystem seine Endlage erreicht hat, die beispielsweise durch den Anschlag 10 gegeben ist. Die Schwenkbewegung des Tastelementes ergibt eine bestimmte Anzahl von Impulsen, die einem nicht näher dargestellten Rechner zugeleitet wird, der dann das bestimmte Arbeitsprogramm auswählt.

Es liegt auf der Hand, daß durch die Anordnung nach der Fig. 1 beispielsweise die Höhe H des Profils 1 gemessen werden kann, da bei höherem Profil eine stärkere Verschwenkung eintritt als bei einem niedrigeren Profil.

Wenn gewünscht, kann bei der Anordnung nach der Fig. 1 beispielsweise spiegelbildlich zur Linie 11 eine gleichartige Anordnung mit einem Tastelement und einem Winkelmeßsystem angeordnet werden, wobei beispielsweise die beiderseitigen Achsen 5 übereinstimmen können. Auf diese Weise kann auch ein anderer Teil des Profiles abgetastet werden, von dem angenommen wird, daß er höher oder niedriger liegt.

Es wird bemerkt, daß bei der Anordnung nach Fig. 1 die Unterlage 2 nicht horizontal angeordnet sein muß. Die Unterlage 2 kann auch ein Anschlag oder dergleichen sein, gegen den sich der Träger 25 beispielsweise in horizontaler Richtung bewegt.

Der Träger 25 kann mit einer Einrichtung zur Fixierung des Profils 1 zum Zwecke der Bearbeitung verbunden oder getrennt von solchen oder ähnlichen Einrichtungen ausgebildet sein.

Beim Ausführungsbeispiel nach der Fig. 1 und auch bei den Ausführungsbeispielen gemäß den Fig. 2 bis 6 ist vorgesehen, daß der Träger 25 direkt ein Winkelmeßsystem trägt. Das Winkelmeßsystem 4 kann aber auch vom Träger 25 getrennt und beispielsweise ortsfest angeordnet sein. Durch geeignete Mittel werden die Bewegungen der Tastelemente dann auf das Winkelmeßsystem übertragen.

Die Verwendung eines Winkelmeßsystems ist für viele Anwendungsfälle der Erfindung zu bevorzugen. Es ist aber auch möglich, ein Winkelmeßsystem durch ein anderes Meßsystem zu ersetzen, das beispielsweise translatorische Bewegungen misst.

Beim Ausführungsbeispiel nach der Fig. 2 ist das Tastelement 6 ebenfalls mit einem Taster 7 versehen. Da der Taster 7 über den Rand 12 der Oberfläche 8 gleitet, ist es leicht möglich, mittels des gleichen Meßsystems beispielsweise die Breite der Oberfläche 8 zu ermitteln, da beim Übergleiten des Randes 12 die Impulsfolge, die das Meßsystem abgibt, eine Unterbrechung erfahren wird. Auf diese Weise läßt sich die Ausdehnung der Oberfläche 8 rechtwinklig zur Vorschubrichtung gemäß Pfeil 3 ermitteln. Die Kontur 26 des Tasters 7 ist derart ausgebildet, daß bei der Gleitbewegung über den Rand 12 die gewünschte, deutliche Unterbrechung der Impulsfolge erhalten wird.

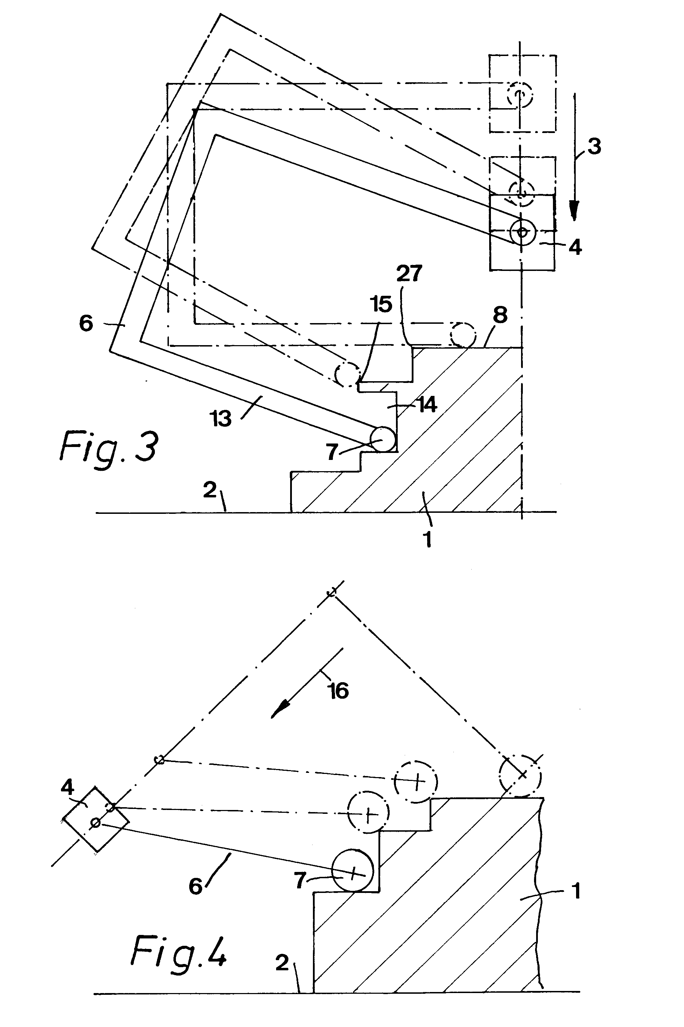

Beim Ausführungsbeispiel nach der Fig. 3 ist das Tastelement 6 bügelartig gestaltet. Mittels dieses Meßbügels 13 können auch Konturen ermittelt werden, wie z.B. die Ausnehmung 14, die aus der Richtung des Pfeiles 3 gesehen verdeckt sind. Beim Auftreffen des Tasters 7 dieses Meßbügels 13 auf der Oberfläche 8 des Profiles 1 bewegt sich der Meßbügel zuerst im Uhrzeigersinn, bis die Kante 15 überschritten wird. Dann folgt eine Bewegung entgegen dem Uhrzeigersinn, die der Tiefe der Ausnehmung 14 entspricht. Dabei wird davon ausgegangen, daß der Meßbügel 13 unter geringer Federspannung steht, die ihn entgegen dem Uhrzeigersinn zu verstellen sucht. Die Bewegung im Uhrzeigersinn ergibt eine bestimmte Impulszahl, die beim Passieren der Abstufung 27 eine Unterbrechung erfährt und beim Passieren der Kante 15 ihren Maximalwert erreicht. Anschliessend folgt eine Impulszahl in entgegengesetzter Richtung bzw. Zählung, die der Tiefe der Ausnehmung 14 entspricht. Es ist klar, daß mittels der Anordnung nach der Fig. 3 schon verhältnismäßig komplizierte Profile abgetastet werden können.

Beim Ausführungsbeispiel nach der Fig. 4 bewegt sich das Winkelmeßsystem 4 in Richtung des Pfeiles 16, also in einem spitzen Winkel zur Unterlage 2 des Profils 1. Der Taster 7 tastet die Außenkontur des Profils 1 ab und wird nacheinander bestimmte Impulsfolgen auslösen, die typisch sind für das betreffende Profil.

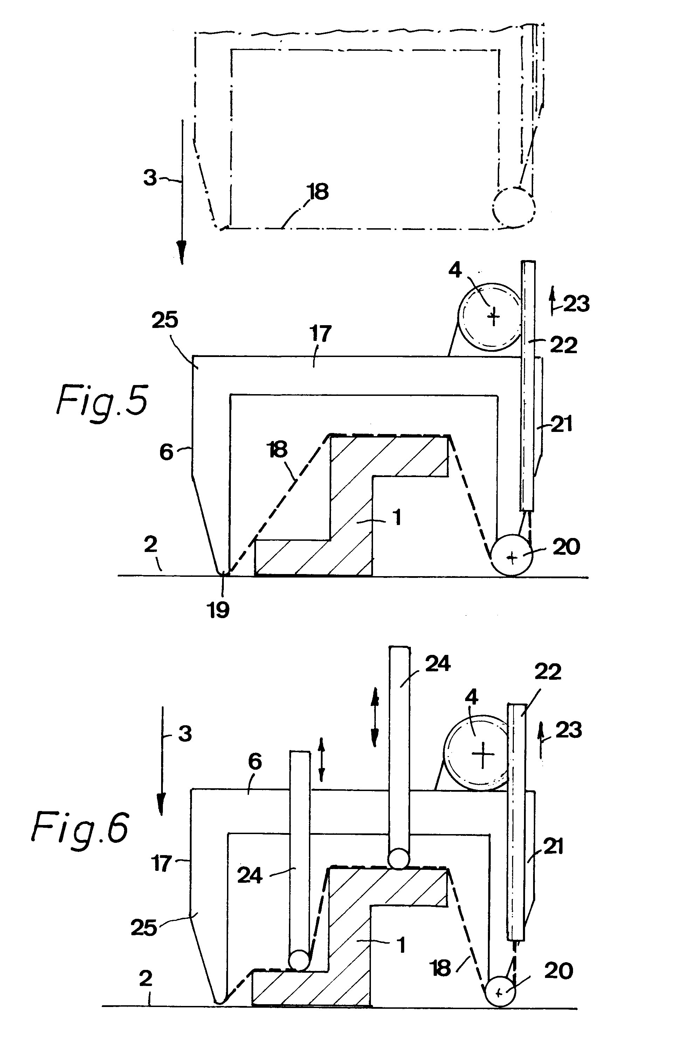

Beim Ausführungsbeispiel nach der Fig. 5 ist ein U-förmiger Halter 17 vorgesehen, der das Profil 1 umgreift und der ein Meßband 18 trägt, das an dem einen Schenkel 19 des Halters 17 befestigt und über eine Rolle 20 am anderen Schenkel 21 des Halter geführt und mit einer Zahnstange 22 verbunden ist. Die Zahnstange 22 ist mit dem Winkelmeßsystem 4 verbunden und wird beispielsweise durch eine Feder in Richtung des Pfeiles 23 gezogen, wodurch das Meßband 18 gestrafft wird. Bei der Vorschubbewegung spannt sich das Meßband 18 über das Profil 1. Die zusätzliche Länge des Meßbandes, die hierbei benötigt wird, wird analog in Impulse umgesetzt und einem Rechner zugeleitet.

Eine ähnliche Ausbildungsform ist in der Fig. 6 dargestellt. Durch federeingestellte Andrückelemente 24, über die das Meßband 18 geführt ist, wird das Meßband 18 noch genauer der Form des Profiles 1 angelegt, so daß das Meßband ohne weiteres auch noch Einzelheiten der Form des Profils 1 ermitteln kann. Die Andrückelemente 24 sind in dem Halter 17 geführt.

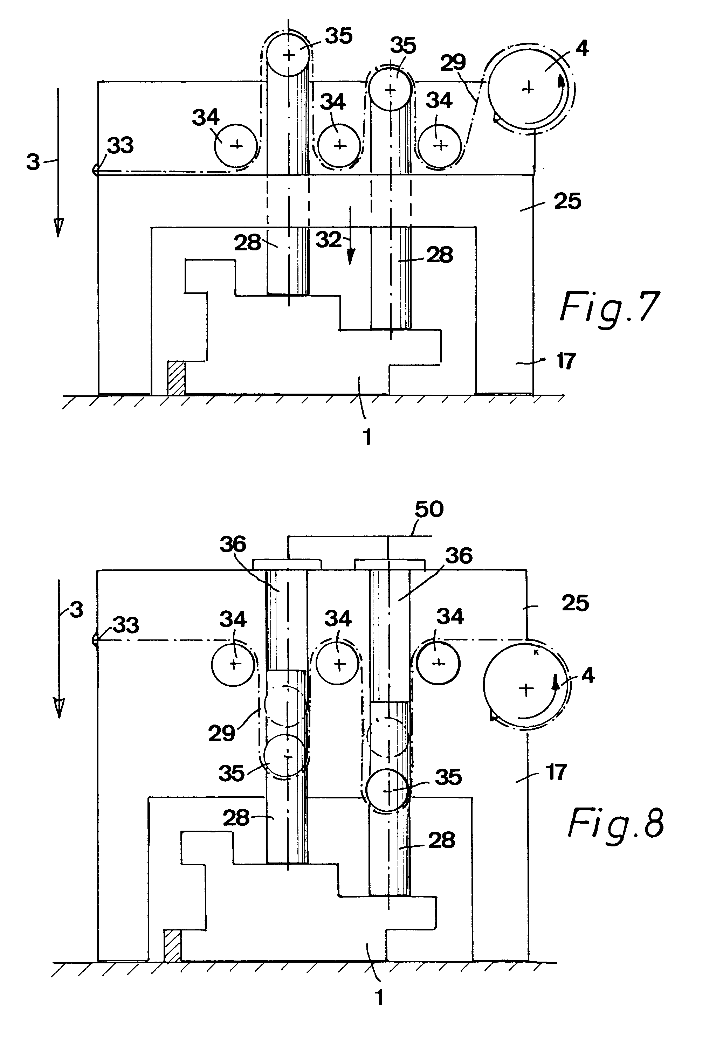

Das Ausführungsbeispiel der Erfindung gemäß Fig. 7 zeigt einen Halter 17, der als Träger der Tastelemente dient, und an dem zwei Taststifte 28 gelagert sind, die unter leichtem Federdruck stehen und in Richtung des Pfeiles 32 gegen das Profil gedrückt werden. Diese Taststifte sind durch ein Band 29 oder dergleichen gekoppelt, das bei 33 festgelegt ist und das über die Rollen 34 und 35 geführt ist. Die Rollen 34 sind jeweils am Halter 17 gelagert und die Rollen 35 an den Taststiften 28. Die flaschenzugartige Verlegung des Bandes 29 vergrößert den Meßweg der Taststifte, so daß am Winkelmeßsystem 4 leicht die benötigte Bandlänge ermittelt werden kann, von der auf die Form des Profils 1 geschlossen werden kann.

Das Ausführungsbeispiel gemäß Fig. 8 unterscheidet sich vom demjenigen nach der Fig. 7 im wesentlichen dadurch, daß die Taststifte 28 als Druckluftkolben ausgebildet sind, die durch Druckluftbeaufschlagung der Zylinderräume 36 über die Leitung 50 vorangeschoben werden. Die Führung über die Rollen 34 und 35 ist ähnlich derjenigen nach der Fig. 7, und die benötigte Länge des Bandes 29 ergibt die Impulszahl zur Bestimmung des Profils 1.

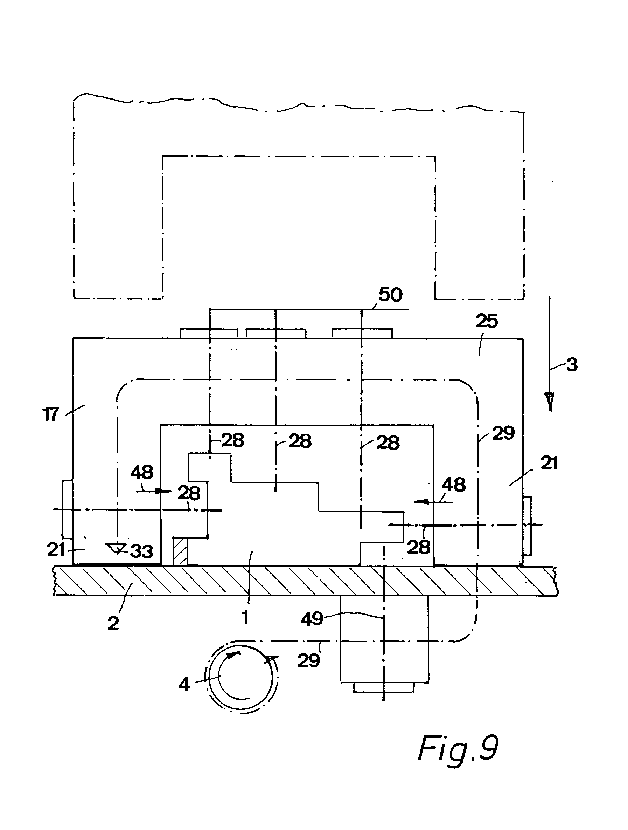

Das Ausführungsbeispiel nach der Fig. 9 gleicht demjenigen nach der Fig. 8, jedoch mit dem Merkmal, daß auch in den Schenkeln 21 des Halters 17 pneumatisch in Richtung der Pfeile 48 vorschiebbare Taststifte vorgesehen sind, durch die es möglich ist, rechtwinklig zur Bewegungsrichtung gemäß dem Pfeil 3 die seitliche Kontur des Profils 1 abzutasten. Es ist auch ein Taststift 49 in der Unterlage vorgesehen, der von unten das Profil abtastet. Mittels eines nicht näher dargestellten Bandes 29 läßt sich auch bei der Anordnung nach der Fig. 9 eine Koppelung der Meßwege der einzelnen Taststifte 28 und auch 49 erreichen.

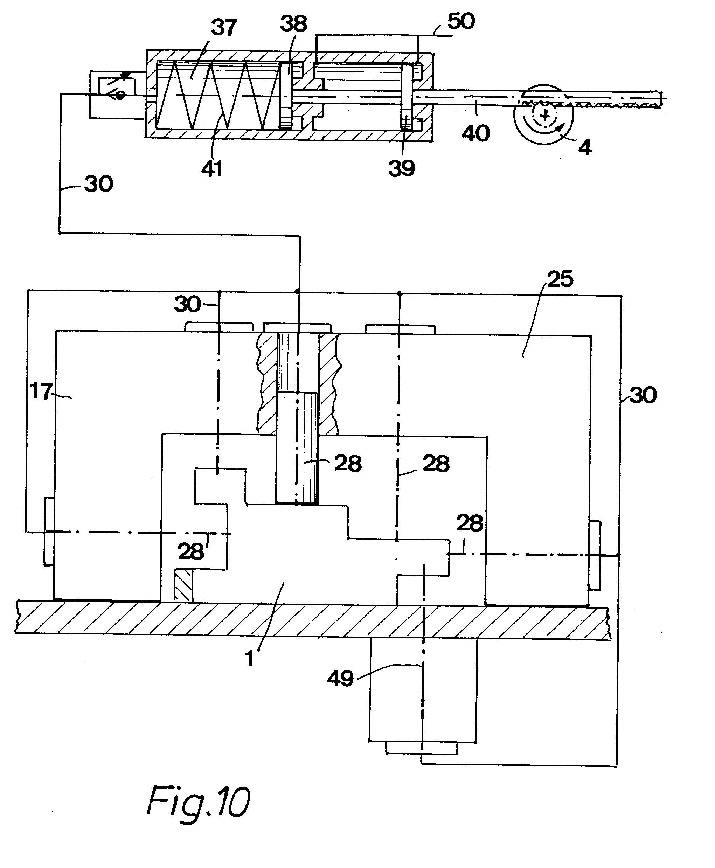

Beim Ausführungsbeispiel nach der Fig. 10 sind alle Taststifte 28 und 49 durch eine hydraulische Flüssigkeit bewegbar. Eine Koppelung durch ein Band fehlt, dafür sind die Zuleitungen der Hydraulikflüssigkeiten zu den Räumen 36, also die Rohrleitungen 30 miteinander und mit dem Zylinderraum 37 verbunden. Die Hydraulikflüssigkeit im Zylinderraum 37 kann durch den Kolben 38 in die Leitungen 30 gedrückt werden, so daß alle kolbenartigen Taststifte 28 und 49 vorgeschoben werden und am Profil anliegen. Der Kolben 38 steht unter der Wirkung eines pneumatisch angetriebenen Kolbens 39, und die Kolbenstange 40 führt zum Meßsystem 4. Die Rückstellfeder im Raum 37 ist mit 41 bezeichnet.

Wenn der Halter 17 seine Meßposition erreicht hat, in der er auf der Unterlage 2 aufsteht, wird durch pneumatische Mittel die Hydraulikflüssigkeit aus dem Raum 37 ausgepreßt, bis die Taststifte zur Anlage kommen. Die erreichte Verschiebung der Kolbenstange 40 entspricht einer bestimmten Impulszahl, die angibt, welche Ausbildung das Profil 1 besitzt.

Insbesondere dann, wenn die Taststifte hydraulisch bewegt werden, ist es möglich, durch die besondere Ausgestaltung der jeweiligen Paßstifte bzw. der zugehörigen Zylinderräume 36 das Meßergebnis in geeigneter Weise zu beeinflussen. Durch Vergrößerung oder Verkleinerung der Querschnitte der einzelnen Zylinderräume 36 läßt sich die benötigte Menge an hydraulischer Flüssigkeit beeinflussen, und es wird möglich, sicherzustellen, daß die jeweilige Menge an hydraulischer Flüssigkeit bei verschiedenen Profilen deutlich verschieden ist, so daß auch deutlich unterschiedliche Impulszahlen erhalten werden.

Es können auch senkrecht zur Bildebene der Zeichnungen hintereinander mehrere Taststifte mit entsprechenden Zylinderräumen vorgesehen werden, die ebenfalls an die Leitungen 30 angeschlossen sind.

Hier zeigt sich ein weiterer Vorteil der Erfindung. Durch einfache Veränderung der Lage, Zahl oder Querschnitte der Taststifte 28 am Halter 17 kann sichergestellt werden, daß auch sonst schwer unterscheidbare Profile deutlich verschiedene Impulszahlen ergeben.

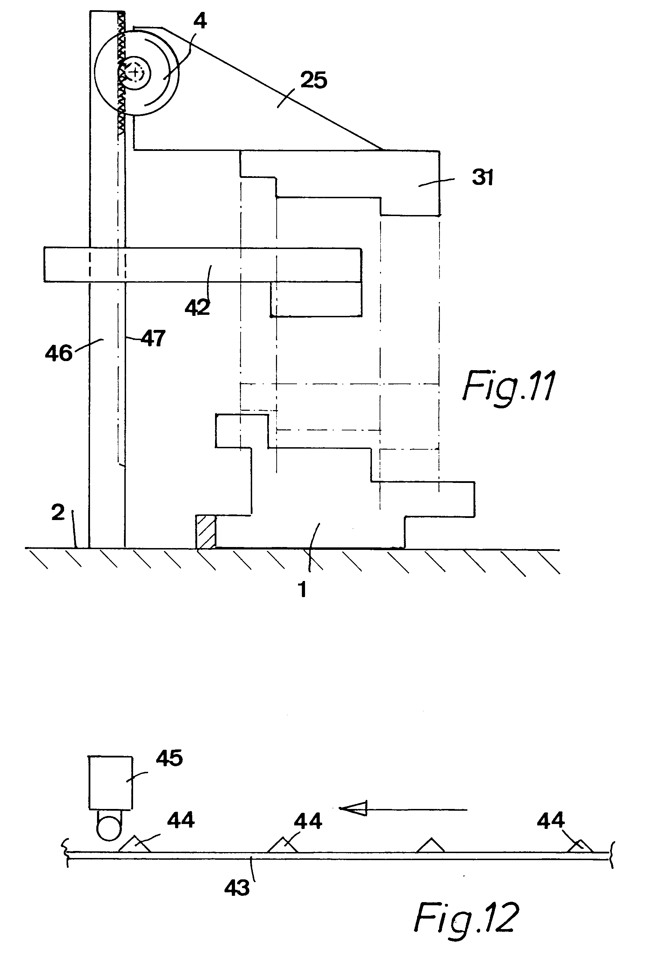

Beim Ausführungsbeispiel nach der Fig. 11 ist ein Träger 25 vorgesehen, an dem eine Konturplatte 31 befestigt ist. Der Träger 25 bewegt sich durch nicht näher dargestellte Mittel entlang der Führung 46, und das Meßsystem 4 wirkt mit der Zahnstangenanordnung 47 zusammen. Der Weg, den der Träger 25 in Richtung des Pfeiles 3 vorangeschoben werden kann, bis die Konturplatte 31 am Profil 1 zur Anlage kommt, ergibt eine bestimmte Impulszahl, die typisch ist für das Profil.

Der Träger 25 kann, wenn gewünscht, auch mit der Spannplatte 42 kombiniert werden, beispielsweise in dem Sinn, daß der Träger 25 mit der Konturplatte 31 von der Spannplatte 42 getragen wird und dann jeweils der Vorschubweg der Konturplatte gegenüber der Spannplatte gemessen wird. Die Spannplatte 42 dient zur Festspannung des Profils 1 auf der Unterlage 2.

Bei den verschiedenen Ausführungsformen der Erfindung, beispielsweise bei denjenigen nach den Fig. 5 und 6 ist die zu messende Länge durch eine Zahnstange ermittelt worden, die sinngemäß mit einem Ritzel zusammenwirkt und eine Winkelbewegung ergibt. Es ist aber auch möglich, wie in Fig. 12 gezeigt, direkt von einem Meßband, einem Seil oder einer Stange 43 die entsprechende Impulszahl abzunehmen, nämlich dadurch, daß das Meßband 43 mit Schaltnocken 44 oder ähnlichen Elementen besetzt ist. Bei der Verschiebung des Meßbandes betätigen die Schaltnocken 44 nacheinander den Schalter 45 und lösen eine je nach dem Verschiebungsweg unterschiedliche Impulszahl aus.

## Patentansprüche

1. Verfahren zur Steuerung des Arbeitsablaufes einer Maschine zur Herstellung von Fensterrahmen aus Kunststoffprofilen in Abhängigkeit von der Profilkontur, wobei mindestens ein Tastelement gegen das Profil bewegt wird und das Tastelement je nach Profilform ein Signal auslöst, dadurch gekennzeichnet, daß vom Tastelement je nach seiner Verstellung beim Kontakt mit dem Profil eine Zahl von elektrischen Impulsen ausgelöst und einem Rechner zugeleitet wird, von dem entsprechend der empfangenen Impulszahl ein dem Profil angepasster, vorbereiteter Arbeitsablauf signalisiert wird.

2. Verfahren nach Anspruch 1, dadurch gekennzeichnet, daß die dem Rechner zugeleiteten Impulse bezüglich ihrer zeitlichen Abfolge ausgewertet werden.

3. Vorrichtung zur Durchführung des Verfahrens nach einem oder beiden der vorhergehenden Ansprüche, dadurch gekennzeichnet, daß auf einem gegen das Profil (1) bewegten Träger (25) ein Tastelement (6,18,28,31) beweglich gelagert ist, das mit einem Meßsystem (4) gekoppelt ist, das je nach der gemessenen Bewegung des Tastelementes die Impulse abgibt.

4. Vorrichtung nach Anspruch 3, dadurch gekennzeichnet, daß der Träger (25) als Tastelement (18) ein gespanntes Band aufweist, das sich an das Profil (1) anlegt und die Impulszahl von der benötigten Bandlänge abhängt.

5. Vorrichtung nach einem oder mehreren der vorhergehenden Ansprüche, dadurch gekennzeichnet, das Andrückelemente (24) vorgesehen sind, die das Band (18) an das Profil andrücken.

6. Vorrichtung nach einem oder mehreren der vorhergehenden Ansprüche, dadurch gekennzeichnet, daß das Band ein Dehnungsmeßstreifen ist, dessen Dehnung die Impulszahl oder einen der Impulszahl analogen elektrischen Meßwert abgibt.

7. Vorrichtung nach einem oder mehreren der vorhergehenden Ansprüche, dadurch gekennzeichnet, daß das Tastelement (6) als Schwenkhebel ausgebildet ist.

8. Vorrichtung nach einem oder mehreren der vorhergehenden Ansprüche, dadurch gekennzeichnet, daß der Träger (25) das Profil umgreift.

9. Vorrichtung nach einem oder mehreren der vorhergehenden Ansprüche, dadurch gekennzeichnet, daß am Träger (25) als verschiebbare Taststifte (28) ausgebildete Tastelemente gelagert sind, die an verschiedenen Stellen am Profil (1) zur Anlage kommen, die untereinander gekoppelt sind und deren Verschiebungsweg die Impulszahl bestimmt.

10. Vorrichtung nach einem oder mehreren der vorhergehenden Ansprüche, dadurch gekennzeichnet, daß die Taststifte (28) mittels eines gemeinsamen Bandes (29) gekoppelt sind.

11. Vorrichtung nach einem oder mehreren der vorhergehenden Ansprüche, dadurch gekennzeichnet, daß die Taststifte (28) durch ein Druckmedium gekoppelt sind.

12. Vorrichtung nach einem oder mehreren der vorhergehenden Ansprüche, dadurch gekennzeichnet, daß das Tastelement als Konturplatte (31) ausgebildet ist.

Fig.1

Fig.2

Fig.3

Fig.4

Fig.5

Fig.6

*Fig.7*

*Fig.8*

Fig.9

*Fig.10*

*Fig.11*

*Fig.12*